# EUROPEAN PATENT APPLICATION

(11) **EP 4 693 694 A1**
(43) Date of publication of application: **11.02.2026**
(21) Application number: 23930927.1
(22) Date of filing: 15.12.2023
(51) Int. Cl.: H01M 50/50, B23K 26/00, B23K 26/21, H01M 50/528

(54) **BATTERY MODULE, MANUFACTURING METHOD OF BATTERY MODULE, AND INSPECTION METHOD OF LASER WELDING**

(30) Priority: 30.03.2023 JP 2023056202
(71) Applicant: AESC Japan Ltd., Yokohama-Shi, Kanagawa 220-0012 (JP)
(72) Inventor: Sasaki, Yoshinari, Zama-shi, Kanagawa 252-0012 (JP); Fujita, Sohei, Zama-shi, Kanagawa 252-0012 (JP); Muto, Yu, Zama-shi, Kanagawa 252-0012 (JP)
(74) Representative: Mathys & Squire
(86) International application number: PCT/JP2023/045059
(87) International publication number: WO 2024/202308

(57) **Abstract**

A battery module (10) includes a laser welding portion (200) formed on a positive electrode tab (120), and a left laser etching mark (210) and a right laser etching mark (220) formed on both sides of the laser welding portion (200) on the positive electrode tab (120).

## Description

### TECHNICAL FIELD

The present invention relates to a battery module, a method of manufacturing a battery module, and a method of inspecting laser welding.

### BACKGROUND ART

In recent years, various battery modules including a plurality of battery cells have been developed. For example, as described in Patent Document 1 or 2, a battery module may be provided with an identifier formed by a laser.

### RELATED DOCUMENT

### PATENT DOCUMENT

Patent Document 1: Pamphlet of International Publication No. WO 2019/193869
Patent Document 2: Japanese Unexamined Patent Publication No. 2006-40875

### SUMMARY OF THE INVENTION

### TECHNICAL PROBLEM

In the battery module, for example, laser welding may be used for joining various workpieces such as joining between tabs of battery cells, joining between tabs and bus bars, and assembly of a housing. Various qualities such as impact resistance, vibration resistance, and environmental test resistance are required for laser welding. However, in a laser welding device used for laser welding, an abnormality due to a change over time may occur, or various abnormalities such as deformation of a tab or an abnormality in the accuracy of incorporation of a housing may occur in a workpiece. When such an abnormality occurs, it may be difficult to suppress a laser welding defect such as a defective joining of laser welding or an abnormal resistance value of a laser welding portion. On the other hand, such laser welding defects may be detected by a method such as laser welding monitoring (LWM) or resistance value measurement. However, even using such a method, it may be relatively difficult to immediately investigate the cause of the laser welding defect or to respond to the change over time of the laser welding defect. In addition, the frequency of occurrence of such laser welding defects may be random, and it may be relatively difficult to grasp a sign of the laser welding defects. Therefore, when the laser welding defect occurs, it is necessary to stop the line of the laser welding and inspect the laser welding portions before and after the laser welding defect occurs, for example, by destructive inspection. Therefore, it may be relatively difficult to easily inspect the factors affecting the quality of laser welding.

An object of the present invention is to easily inspect factors affecting the quality of laser welding. Other objects of the present invention will become apparent from the description of the present specification.

### SOLUTION TO PROBLEM

One aspect of the present invention is as follows.
[1] A battery module including
   a laser welding portion formed on a workpiece, and
   a laser etching mark formed on at least one of both sides of the laser welding portion on the workpiece.
[2] The battery module according to [1], in which the laser etching mark has a corner portion.
[3] The battery module according to [1] or [2], in which the laser etching mark has a plurality of patterns at least partially overlapping with each other.
[4] The battery module according to any one of [1] to [3], in which the laser etching mark has a plurality of patterns whose centers overlap with each other.
[5] The battery module according to any one of [1] to [4], in which similarities or differences between the laser etching mark and a pre-designed laser etching mark are inspected.
[6] A method of manufacturing a battery module including
   a step of forming a laser welding portion on a workpiece, and
   a step of forming a laser etching mark on at least one of both sides of the laser welding portion on the workpiece.
[7] A method of inspecting laser welding including
   a step of inspecting similarities or differences between a laser etching mark formed on a workpiece on which a laser welding portion is formed and a pre-designed laser etching mark.

### ADVANTAGEOUS EFFECTS OF INVENTION

According to the above-described aspect of the present invention, the factors affecting the quality of laser welding can be easily inspected.

### BRIEF DESCRIPTION OF THE DRAWINGS

[FIG. 1] A perspective view of a part of a battery module according to an embodiment.
[FIG. 2] A view showing a cross section of a laser welding portion according to the embodiment.
[FIG. 3] A view showing an example of a laser welding device for laser-welding a workpiece.
[FIG. 4] A view for describing a first example of a method of forming a laser welding portion.
[FIG. 5] A view for describing a second example of the method of forming the laser welding portion.
[FIG. 6] A view for explaining a method of forming a left first laser etching pattern, a laser welding portion, and a right first laser etching pattern according to the embodiment.
[FIG. 7] A view for explaining a method of forming a left laser etching mark and a right laser etching mark according to the embodiment.
[FIG. 8] A view showing a method of forming a first laser etching pattern according to the embodiment.
[FIG. 9] A graph showing an example of a relationship between a laser output and a laser spot size in the first laser etching pattern.
[FIG. 10] A view for explaining a method of measuring the laser spot size in the first laser etching pattern.
[FIG. 11] A cross-sectional view of a workpiece in an etching mode.
[FIG. 12] A cross-sectional view of a workpiece in a melting mode.
[FIG. 13] A diagram showing a first example of an abnormality in a shape of the first laser etching pattern.
[FIG. 14] A diagram showing a second example of the abnormality in the shape of the first laser etching pattern.
[FIG. 15] A diagram showing a third example of the abnormality in the shape of the first laser etching pattern.
[FIG. 16] A diagram showing a fourth example of the abnormality in the shape of the first laser etching pattern.
[FIG. 17] A diagram showing a fifth example of the abnormality in the shape of the first laser etching pattern.
[FIG. 18] A diagram showing a first example of an abnormality in a shape of a laser etching mark.
[FIG. 19] A diagram showing a second example of the abnormality in the shape of the laser etching mark.
[FIG. 20] A view showing a laser etching mark according to a modification example.
[FIG. 21] A view for describing another example of a method of inspecting the laser welding according to the embodiment.
[FIG. 22] A view for describing still another example of the method of inspecting the laser welding according to the embodiment.

### DESCRIPTION OF EMBODIMENTS

Hereinafter, embodiments and modification examples of the present invention will be described with reference to the accompanying drawings. In all drawings, the same constituent elements are denoted by the same reference signs, and detailed description thereof will not be repeated.

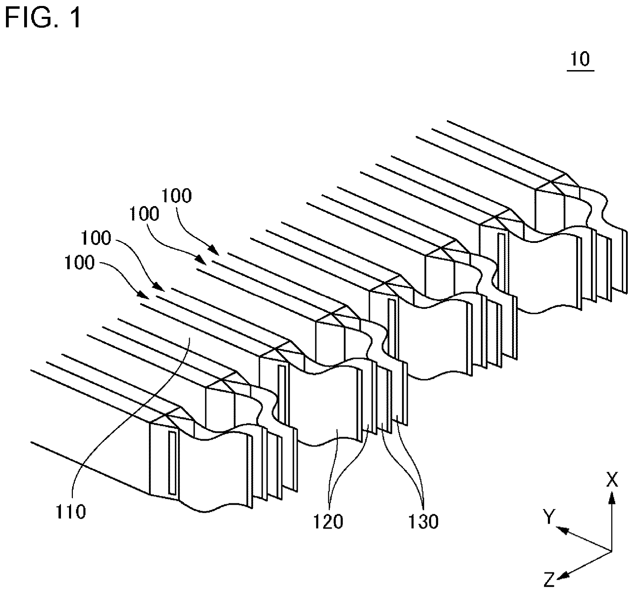

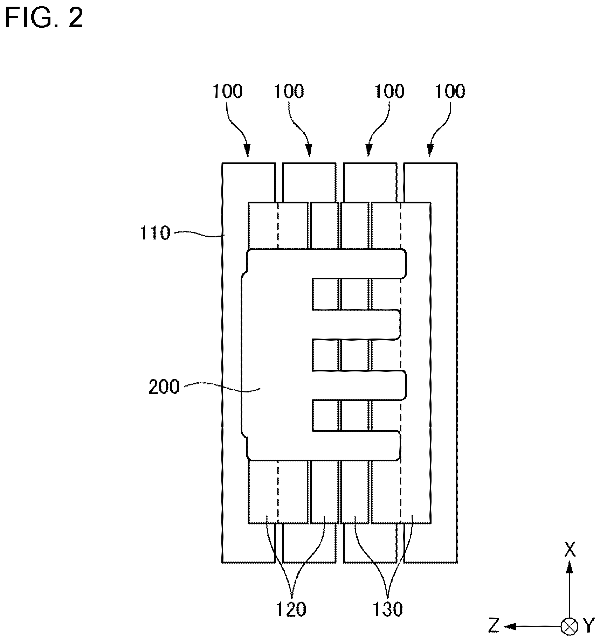

FIG. 1 is a perspective view of a part of a battery module 10 according to an embodiment. FIG. 2 is a view showing a cross section of a laser welding portion 200 according to the embodiment.

In each drawing, the X-axis, the Y-axis, and the Z-axis orthogonal to each other are shown for description. Hereinafter, a direction parallel to each of the X-axis, the Y-axis, and the Z-axis is referred to as an X direction, a Y direction, and a Z direction, respectively, as necessary. Hereinafter, as necessary, a side indicated by an arrow indicating the X-axis is referred to as a +X side, and a side opposite to the side indicated by the arrow indicating the X-axis is referred to as a -X side. Hereinafter, as necessary, a side indicated by an arrow indicating the Y-axis is referred to as a +Y side, and a side opposite to the side indicated by the arrow indicating the Y-axis is referred to as a -Y side. Hereinafter, as necessary, a side indicated by an arrow indicating the Z-axis is referred to as a +Z side, and a side opposite to the side indicated by the arrow indicating the Z-axis is referred to as a -Z side. Hereinafter, as necessary, a direction perpendicular to the Z-axis is referred to as an XY plane direction, a direction perpendicular to the Y-axis is referred to as a ZX plane direction, and a direction perpendicular to the X-axis is referred to as a YZ plane direction. Hereinafter, as necessary, a rotation direction around a direction parallel to the Z direction will be referred to as a θ direction.

A white circle with an X attached to the X-axis, the Y-axis, or the Z-axis in some drawings indicates that an arrow of the axis indicated by the white circle is directed from the front to the back of the paper surface. A white circle with a black dot indicating the X-axis, the Y-axis, or the Z-axis indicates that an arrow of the axis indicated by the white circle is directed from the back to the front of the paper surface.

The battery module 10 according to the embodiment includes a plurality of battery cells 100. Each battery cell 100 extends substantially parallel to the XY plane direction. Each battery cell 100 has a thickness substantially parallel to the Z direction. The plurality of battery cells 100 is stacked substantially parallel to the Z direction. Each battery cell 100 has a battery element (not shown), an exterior material 110, a positive electrode tab 120, and a negative electrode tab 130. In one example, the battery element includes a plurality of positive electrodes and a plurality of negative electrodes alternately stacked in the Z direction. The positive electrode and the negative electrode adjacent to each other in the Z direction are separated from each other by a separator (not shown). However, the structure of the battery element is not limited to this example.

The exterior material 110 accommodates a battery element (not shown) and an electrolyte (not shown). The exterior material 110 is made of, for example, aluminum laminate.

The positive electrode tab 120 is electrically connected to the positive electrode of the battery element. The positive electrode tab 120 made of, for example, at least one of aluminum and an aluminum alloy. The surface of the positive electrode tab 120 may be subjected to secondary processing such as a corrosion-resistant protective coating film or a plating film. However, the material constituting the positive electrode tab 120 is not limited to this example as long as the material has a relatively high electrical conductivity, that is, a relatively low electrical resistivity.

The negative electrode tab 130 is electrically connected to the negative electrode of the battery element. The negative electrode tab 130 is made of, for example, at least one of copper and a copper alloy. The surface of the negative electrode tab 130 may be subjected to secondary processing such as a corrosion-resistant protective coating film or a plating film. However, the material constituting the negative electrode tab 130 is not limited to this example as long as the material has a relatively high electrical conductivity, that is, a relatively low electrical resistivity. The material constituting the positive electrode tab 120 and the material constituting the negative electrode tab 130 may be the same as or different from each other.

In each battery cell 100, the positive electrode tab 120 and the negative electrode tab 130 are drawn out to opposite sides of the exterior material 110 in the Y direction. However, the method of drawing out the positive electrode tab 120 and the negative electrode tab 130 is not limited to this example. For example, the positive electrode tab 120 and the negative electrode tab 130 may be drawn out from the same side of the exterior material 110 on the +Y side or the -Y side. In this example, the positive electrode tab 120 and the negative electrode tab 130 are arranged substantially parallel to the X direction.

In the embodiment, a plurality of cell groups including a plurality of battery cells 100 electrically connected in parallel is electrically connected in series. In the example shown in FIG. 1, eight cell groups each including two battery cells 100 are schematically shown. However, the number of cell groups included in the actual battery module 10 is not limited to the example shown in FIG. 1. In the example shown in FIG. 1, two positive electrode tabs 120 are drawn out from the two battery cells 100 included in the third cell group from the +Z side toward the -Y side, and two negative electrode tabs 130 are drawn out from the two battery cell 100 included in the fourth cell group from the +Z side toward the -Y side. As shown in FIG. 2, the positive electrode tab 120 and the negative electrode tab 130 are bonded to each other by the laser welding portion 200. Therefore, in the example shown in FIG. 1, the two battery cells 100 included in the third cell group from the +Z side and the two battery cells 100 included in the fourth cell group from the +Z side are electrically connected in series. Such bonding portions of the positive electrode tab 120 and the negative electrode tab 130 are alternately provided on the +Y side and the -Y side of the battery module 10. Therefore, in the example shown in FIG. 1, the eight cell groups are electrically connected in series.

The aspect of the electrical connection of the plurality of battery cells 100 is not limited to the above-described example. For example, a plurality of cell groups each including three or more battery cells 100 electrically connected in parallel may be electrically connected in series. Alternatively, a plurality of single battery cells 100 may be connected in series.

The method of bonding the positive electrode tab 120 and the negative electrode tab 130 to each other may be laser welding alone or a combination of laser welding and another bonding method. For example, a bonding method such as a caulking technique, friction stir welding (FSW), ultrasonic welding, tungsten inert gas (TIG) welding, or metal inert gas (MIG) welding may be combined.

The laser welding portion 200 is formed by laser irradiation from a side where the positive electrode tab 120 is positioned with respect to a bonding portion between the positive electrode tab 120 and the negative electrode tab 130. In the example shown in FIG. 2, the laser welding portion 200 is formed by laser irradiation from the +Z side with respect to a bonding portion between the positive electrode tab 120 and the negative electrode tab 130. As shown in FIG. 2, the laser welding portion 200 reaches at least partially the negative electrode tab 130. Therefore, the positive electrode tab 120 and the negative electrode tab 130 are bonded to each other.

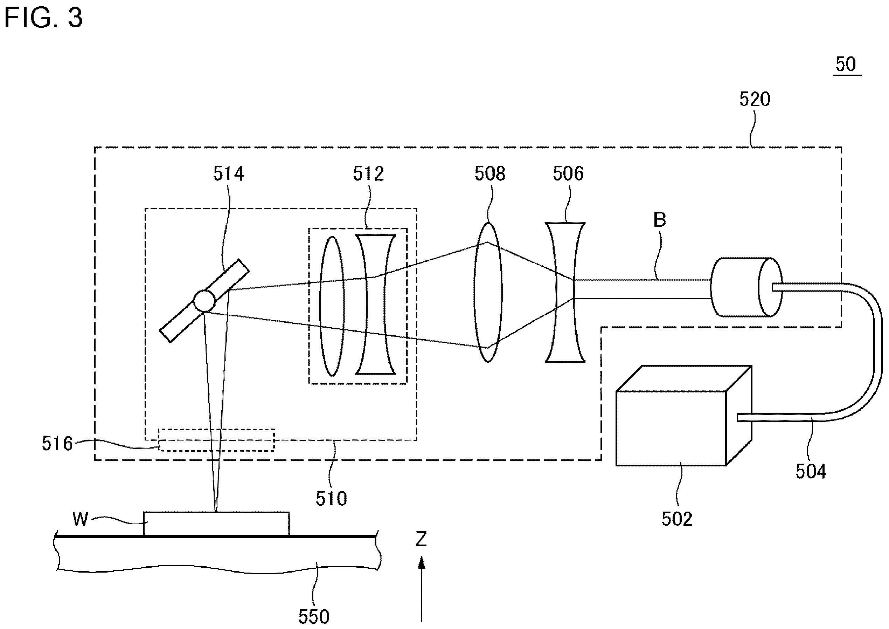

FIG. 3 is a view showing an example of a laser welding device 50 for laser-welding a workpiece W. In the example shown in FIG. 3, the workpiece W is mounted on a stage 550 substantially perpendicular to the Z direction. The workpiece W is laser-welded by the laser welding device 50 as follows. However, the structure of the laser welding device for laser-welding the workpiece W is not limited to the structure of the laser welding device 50 shown in FIG. 3.

As shown in FIG. 3, a laser beam B is emitted from a laser oscillator 502 via an optical fiber 504. The laser beam B passes through the beam expander 506 and the focus lens 508 in order and is incident on a galvanometric mirror optical system 510. The beam diameter of the laser beam B is enlarged by the beam expander 506. The position of the focus of the laser beam B in the Z direction in the workpiece W can be adjusted by moving the focus lens 508 in a direction substantially parallel to the optical axis of the laser beam B.

The laser beam B is incident on the galvanometric mirror optical system 510, passes through the condenser lens 512, and is incident on the movable mirror 514. The laser beam B is reflected by the movable mirror 514, passes through the cover glass 516, and irradiates the workpiece W. The irradiation positions of the laser beam B on the workpiece W in the X direction and the Y direction can be adjusted by the movable mirror 514.

A distal end portion of the optical fiber 504, the beam expander 506, the focus lens 508, and the galvanometric mirror optical system 510 can be moved in the XY plane direction by a moving unit 520. The irradiation positions of the laser beam B on the workpiece W in the X direction, the Y direction, and the Z direction can be adjusted by the moving unit 520.

The stage 550 is movable in the X direction, the Y direction, the Z direction, and the θ direction. The irradiation positions of the laser beam B on the workpiece W in the X direction, the Y direction, the Z direction, and the θ direction can be adjusted by the stage 550.

In the example shown in FIG. 2, the two positive electrode tabs 120 and the two negative electrode tabs 130 to be bonded to each other correspond to the workpiece W shown in FIG. 3. In this example, the bonding portion between the positive electrode tab 120 and the negative electrode tab 130 is irradiated with the laser beam B from the +Z side.

The welding condition of the workpiece W may vary depending on whether the materials to be welded are the same type or different types. For example, when dissimilar materials are welded, a metal intermetallic compound film (IMC) may be formed at a high melting point in a welded portion of the dissimilar materials such as aluminum and copper if welding conditions deviate from optimum conditions. When the IMC is formed, a defect such as a high hardness of the IMC or brittleness of the IMC may occur. Alternatively, in a welded portion of the same type of material such as aluminum-aluminum, if the welding conditions deviate from the optimum conditions, a defect such as solidification cracking of the welded portion may occur. Therefore, in order to avoid these problems, the welding condition of the workpiece W needs to be set to the optimum condition. The welding condition of the workpiece W may deviate from the optimum condition due to various abnormalities such as an abnormality of the laser oscillator 502 of the laser welding device 50 and an abnormality of various optical systems such as the galvanometric mirror optical system 510. Therefore, the various abnormalities of the laser welding device 50 may affect the bonding strength of the laser welding portion 200. In other words, the present embodiment can be used to determine the quality of the bonding strength of the laser welding portion 200 in the inspection described later.

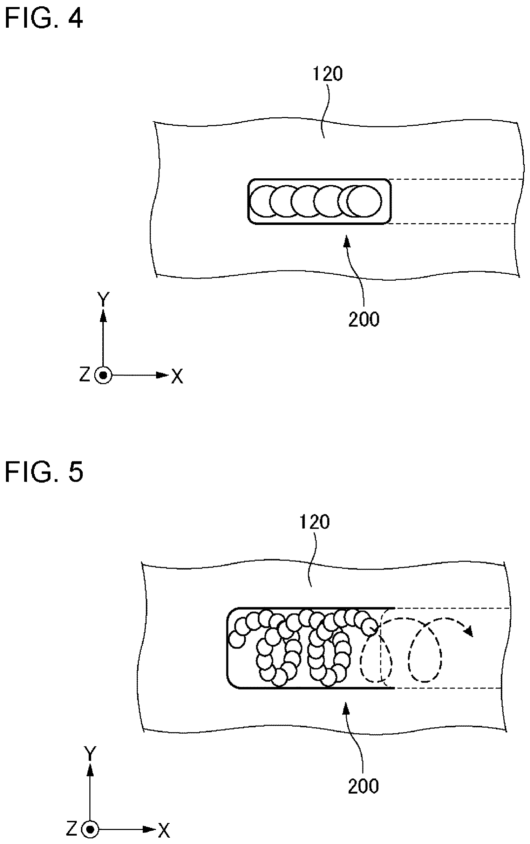

FIG. 4 is a view for describing a first example of a method of forming a laser welding portion 200.

In FIG. 4, a circle attached to the laser welding portion 200 indicates a spot generated by the laser emitted from the +Z side. In the example shown in FIG. 4, a plurality of spots is continuously generated in parallel with the X direction from the left side to the right side of the positive electrode tab 120, and the laser welding portion 200 is formed. The laser oscillator 502 can be set to any one of a continuous wave (CW) type or a pulse oscillation type from predetermined conditions such as a purpose of welding or a feature of the workpiece W. In the example shown in FIG. 4, the laser oscillator 502 is a continuous wave (CW) type.

FIG. 5 is a view for describing a second example of the method of forming the laser welding portion 200. A second example shown in FIG. 5 is the same as the first example shown in FIG. 4 except for the following points.

As indicated by a broken line arrow virtually attached to the right side of the laser welding portion 200 in FIG. 5, in the example shown in FIG. 5, the wobbling welding is performed. In the example shown in FIG. 5, a plurality of spots is continuously generated in a clockwise direction from the left side to the right side of the positive electrode tab 120, and the laser welding portion 200 is formed.

In the laser welding exemplified in FIGS. 4 and 5, a phenomenon such as wear of each movable element of the laser welding device 50 or a thermal lens effect of various optical lenses may occur due to long-time operation of the laser welding device 50. For example, a phenomenon such as sticking of the movable mirror 514 due to the operational abnormality of the movable mirror 514, displacement of the movable mirror 514, blocking of the laser beam B by various optical system lenses such as the beam expander 506, the focus lens 508, the condenser lens 512, and the cover glass 516, or a decrease in the transmittance of the various optical system lenses may occur. It may be relatively difficult to find such a phenomenon in daily pre-maintenance. In addition, it may be relatively difficult to grasp a sign of the above-described phenomenon. Furthermore, productivity is reduced unless the frequency of stopping and maintaining the production equipment is simply increased.

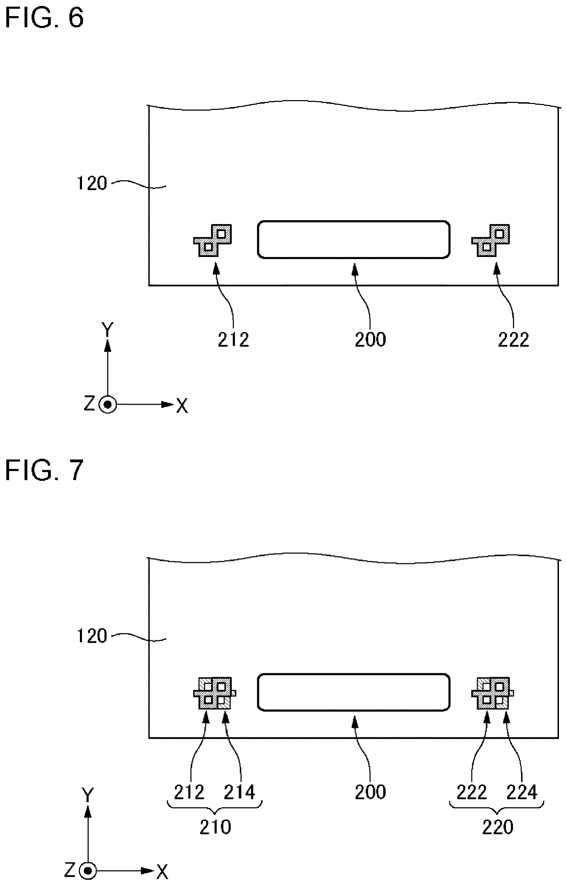

FIG. 6 is a view for explaining a method of forming a left first laser etching pattern 212 (hereinafter, simply referred to as a left first pattern 212), a laser welding portion 200, and a right first laser etching pattern 222 (hereinafter, simply referred to as a right first pattern 222) according to the embodiment. FIG. 7 is a view for explaining a method of forming a left laser etching mark 210 (hereinafter, simply referred to as a left mark 210) and a right laser etching mark 220 (hereinafter, simply referred to as a right mark 220) according to the embodiment. Hereinafter, for the sake of description, the -X side will be referred to as a left side and the +X side will be referred to as a right side, as necessary. However, the left side and the right side do not necessarily mean a direction when the battery module 10 is used.

First, as shown in FIG. 6, the left first pattern 212 is formed on the left side portion of the positive electrode tab 120 by laser irradiation from the +Z side. The left first pattern 212 has a substantially ∞ shape.

Next, as shown in FIG. 6, the laser welding portion 200 is formed from the left side portion to the right side portion of the positive electrode tab 120 by laser irradiation from the +Z side. The laser welding portion 200 extends substantially parallel to the X direction. The left first pattern 212 is located on the left side with respect to the left end portion of the laser welding portion 200.

Next, as shown in FIG. 6, the right first pattern 222 is formed on the right side portion of the positive electrode tab 120 by laser irradiation from the +Z side. The shape of the left first pattern 212 and the shape of the right first pattern 222 are substantially the same. The right first pattern 222 is located on the right side with respect to the right end portion of the laser welding portion 200. The left first pattern 212 and the right first pattern 222 are located on both sides of the laser welding portion 200 in the X direction.

Next, as shown in FIG. 7, a left second laser etching pattern 214 (hereinafter, simply referred to as a left second pattern 214) is formed on the left side portion of the positive electrode tab 120 by laser irradiation from the +Z side. The left first pattern 212 and the left second pattern 214 are substantially symmetrical patterns. The left first pattern 212 and the left second pattern 214 at least partially overlap each other. Accordingly, the left mark 210 having the left first pattern 212 and the left second pattern 214 is formed. The left mark 210 has a substantially + shape surrounded by a substantially square shape.

Next, as shown in FIG. 7, a right second laser etching pattern 224 (hereinafter, simply referred to as a right second pattern 224) is formed on the right side portion of the positive electrode tab 120 by laser irradiation from the +Z side. The right first pattern 222 and the right second pattern 224 are substantially symmetrical patterns. The right first pattern 222 and the right second pattern 224 at least partially overlap each other. Accordingly, the right mark 220 having the right first pattern 222 and the right second pattern 224 is formed. The right mark 220 has a substantially + shape surrounded by a substantially square. The left mark 210 and the right mark 220 are positioned on both sides of the laser welding portion 200 in the X direction.

The optimum conditions for the laser irradiation for forming the laser welding portion 200 are generally determined in advance according to the type of the workpiece W. For example, when the workpiece W is an aluminum alloy and a copper alloy and the aluminum alloy and the copper alloy are laser-welded to each other, the optimum conditions for laser irradiation are, for example, a laser wavelength of 1064 nm, a laser spot diameter of 72 µm at the time of focusing, and a laser output of 1000 W. The optimum condition is constant as long as the external environment of the workpiece W, such as the surrounding environment of the workpiece W and the gas atmosphere, is constant.

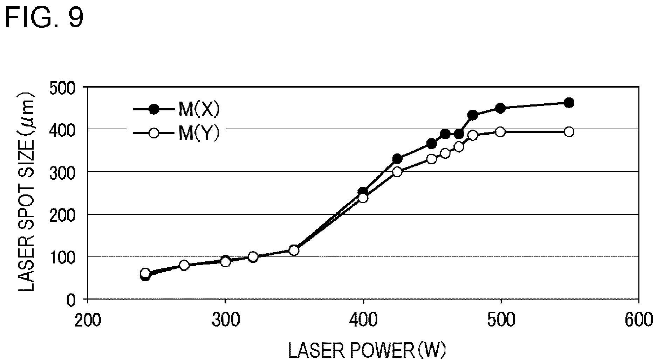

The laser output for forming the left mark 210 and the right mark 220 is lower than the laser output in the optimum condition of the laser irradiation for forming the laser welding portion 200. The left mark 210 and the right mark 220 are formed in an etching mode described later with reference to FIGS. 9 to 12. For example, when the optimum condition for laser irradiation for forming the laser welding portion 200 is the above-described example, the laser output for forming the left mark 210 and the right mark 220 is about 1/3 of the laser output under the optimum condition, that is, about 200 W to 400 W. In this example, a recess having a depth of about 10 µm to 30 µm is formed on the surface of the workpiece by laser etching.

In the examples shown in FIGS. 6 and 7, the left mark 210 and the right mark 220 are formed on both sides of the laser welding portion 200 in the X direction in the positive electrode tab 120. However, one of the left mark 210 and the right mark 220 may not be formed.

Hereinafter, when it is not necessary to particularly distinguish between the left mark 210 and the right mark 220 in the description, the left mark 210 and the right mark 220 may be simply referred to as a mark 210. Hereinafter, when it is not necessary to particularly distinguish between the left first pattern 212 and the right first pattern 222 in description, the left first pattern 212 and the right first pattern 222 may be simply referred to as the first pattern 212. Hereinafter, when it is not particularly necessary to distinguish between the left second pattern 214 and the right second pattern 224 in description, the left second pattern 214 and the right second pattern 224 may be simply referred to as a second pattern 214.

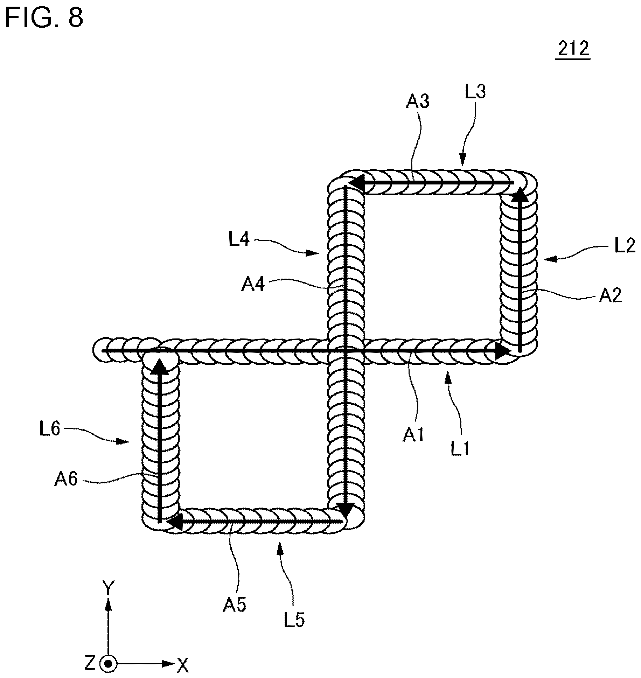

FIG. 8 is a view showing a method of forming a first pattern 212 according to the embodiment. In FIG. 8, for the sake of description, six arrows of a first arrow A1 to a sixth arrow A6 are virtually shown. The circles shown along the first pattern 212 in FIG. 8 indicate laser spots generated by laser irradiation.

The first pattern 212 is formed as follows. The second pattern 214 is formed symmetrically with respect to the Y-axis by the method described below for the first pattern 212.

First, as indicated by a first arrow A1, a plurality of laser spots is sequentially generated from the -X side toward the +X side substantially parallel to the X direction. Accordingly, the first line pattern L1 substantially parallel to the X direction is generated. The first line pattern L1 includes a plurality of laser spots arranged substantially parallel to the X direction.

Next, as indicated by a second arrow A2, a plurality of laser spots is sequentially generated from the -Y side toward the +Y side substantially parallel to the Y direction. Accordingly, the second line pattern L2 substantially parallel to the Y direction is generated. The second line pattern L2 includes a plurality of laser spots arranged substantially parallel to the Y direction. An end portion of the first line pattern L1 on the +X side and an end portion of the second line pattern L2 on the -Y side are substantially orthogonal to each other. Therefore, the first pattern 212 has an approximately right-angled corner portion formed by the intersection of the end portion of the first line pattern L1 on the +X side and the end portion of the second line pattern L2 on the -Y side.

Next, as indicated by a third arrow A3, a plurality of laser spots is sequentially generated from the +X side toward the -X side substantially parallel to the X direction. Accordingly, the third line pattern L3 substantially parallel to the X direction is generated. The third line pattern L3 includes a plurality of laser spots arranged substantially parallel to the X direction. An end portion of the second line pattern L2 on the +Y side and an end portion of the third line pattern L3 on the +X side are substantially orthogonal to each other. Therefore, the first pattern 212 has an approximately right-angled corner portion formed by the intersection of the end portion of the second line pattern L2 on the +Y side and the end portion of the third line pattern L3 on the +X side.

Next, as indicated by a fourth arrow A4, a plurality of laser spots is sequentially generated from the +Y side toward the -Y side substantially parallel to the Y direction. Accordingly, the fourth line pattern L4 substantially parallel to the Y direction is generated. The fourth line pattern L4 includes a plurality of laser spots arranged substantially parallel to the Y direction. An end portion of the third line pattern L3 on the -X side and an end portion of the fourth line pattern L4 on the +Y side are substantially orthogonal to each other. Therefore, the first pattern 212 has a substantially right-angled corner portion formed by the intersection of the end portion of the third line pattern L3 on the -X side and the end portion of the fourth line pattern L4 on the +Y side.

Next, as indicated by a fifth arrow A5, a plurality of laser spots is sequentially generated from the +X side toward the -X side substantially parallel to the X direction. Accordingly, the fifth line pattern L5 substantially parallel to the X direction is generated. The fifth line pattern L5 includes a plurality of laser spots arranged substantially parallel to the X direction. An end portion of the fourth line pattern L4 on the -Y side and an end portion of the fifth line pattern L5 on the +X side are substantially orthogonal to each other. Therefore, the first pattern 212 has an approximately right-angled corner portion formed by the intersection of the end portion of the fourth line pattern L4 on the -Y side and the end portion of the fifth line pattern L5 on the +X side.

Next, as indicated by a sixth arrow A6, a plurality of laser spots is sequentially generated from the -Y side toward the +Y side substantially parallel to the Y direction. Accordingly, the sixth line pattern L6 substantially parallel to the Y direction is generated. The sixth line pattern L6 includes a plurality of laser spots arranged substantially parallel to the Y direction. An end portion of the fifth line pattern L5 on the -X side and an end portion of the sixth line pattern L6 on the -Y side are substantially orthogonal to each other. Therefore, the first pattern 212 has an approximately right-angled corner portion formed by the intersection of the end portion of the fifth line pattern L5 on the -X side and the end portion of the sixth line pattern L6 on the -Y side.

In the first pattern 212, the third line pattern L3 and the fifth line pattern L5 are positioned at substantially equal distances from the first line pattern L1 in the Y direction. In the first pattern 212, the second line pattern L2 and the sixth line pattern L6 are positioned at substantially equal distances from the fourth line pattern L4 in the X direction.

In the example shown in FIG. 8, the end portion of the first line pattern L1 on the -X side protrudes toward the -X side from the end portion of the sixth line pattern L6 on the +Y side. Therefore, the start position of the formation of the first pattern 212 can be easily identified. However, the end portion of the first line pattern L1 on the -X side may not protrude toward the -X side from the end portion of the sixth line pattern L6 on the +Y side.

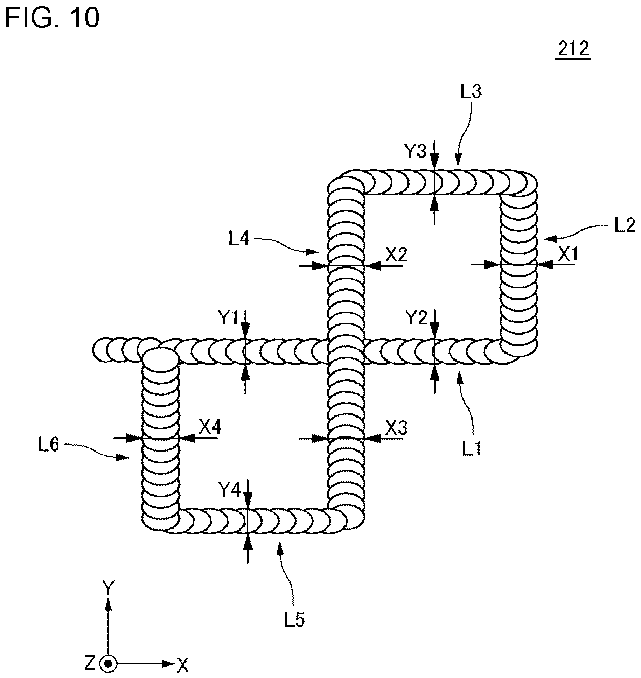

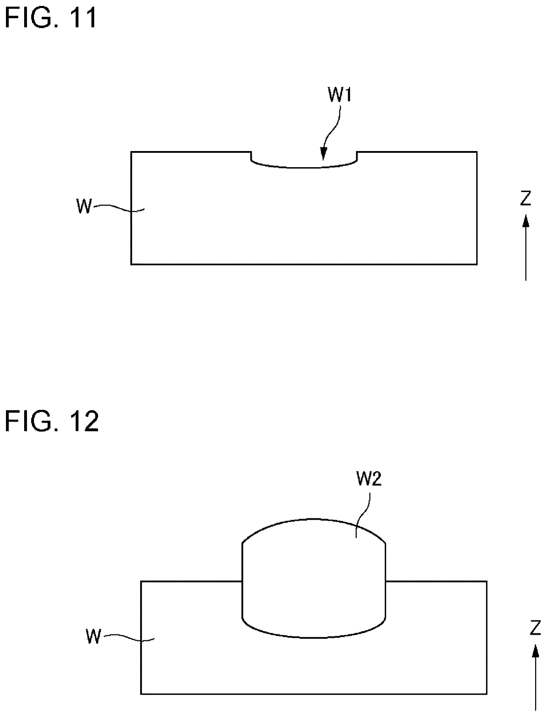

FIG. 9 is a graph showing an example of a relationship between a laser output and a laser spot size in the first pattern 212. FIG. 10 is a view for explaining a method of measuring the laser spot size in the first pattern 212. FIG. 11 is a cross-sectional view of a workpiece W in an etching mode. FIG. 12 is a cross-sectional view of a workpiece W in a melting mode. In the examples shown in FIGS. 9 to 12, the workpiece W is an aluminum alloy. However, the workpiece W is not limited to an aluminum alloy and may be, for example, copper.

The horizontal axis of the graph shown in FIG. 9 indicates the laser output (unit: W) for forming the first pattern 212. The vertical axis of the graph shown in FIG. 9 shows the laser spot size (unit: µm) in the first pattern 212.

The plot of M(X) in the graph shown in FIG. 9 indicates M(X) = (X1 + X2 + X3 + X4) /4. As shown in FIG. 10, X1 represents a width in the X direction at the substantially center portion of the second line pattern L2 in the Y direction. X2 represents a width in the X direction at a portion located at a substantially equal distance from the first line pattern L1 and the third line pattern L3 in the fourth line pattern L4. X3 represents a width in the X direction at a portion located at a substantially equal distance from the first line pattern L1 and the fifth line pattern L5 in the fourth line pattern L4. X4 represents a width in the X direction at a substantially center portion of the sixth line pattern L6 in the Y direction.

The plot of M(Y) in the graph shown in FIG. 9 indicates M(Y) = (Y1 + Y2 + Y3 + Y4)/4. As shown in FIG. 10, Y1 represents a width in the Y direction at a portion located at a substantially equal distance from the fourth line pattern L4 and the sixth line pattern L6 in the first line pattern L1. Y2 represents a width in the Y direction at a portion located at a substantially equal distance from the fourth line pattern L4 and the second line pattern L2 in the first line pattern L1. Y3 represents a width in the Y direction at a substantially center portion of the third line pattern L3 in the X direction. Y4 represents a width in the Y direction at a substantially center portion of the fifth line pattern L5 in the X direction.

As shown in FIG. 9, both M(X) and M(Y) are about 100 µm in the vicinity of the laser output of 240 W to 350 W. In a laser output of 240 W to 350 W, the laser irradiation by the laser welding device 50 is in an etching mode. In the etching mode, as shown in FIG. 11, a recess W1 is formed on the +Z side surface of the workpiece W by laser etching. When where M(X) and M(Y) in the etching mode are theoretical values of the laser spot diameters during focusing or approximate to the theoretical values, it indicates that the focus of the focus lens 508 matches the workpiece W. In other words, in the embodiment, the laser spot diameters can be measured from M(X) and M(Y) without using a special device. Therefore, the laser spot diameter can be measured in a short time as compared with a case where a special device is used. Even if the laser spot system is not a theoretical laser spot system, similar measurement can be performed as long as the above-described approximately 100 µm is constantly maintained as a default value.

As shown in FIG. 9, both M(X) and M(Y) are about 200 µm or more at the laser output of 400 W or more. When the laser output is 400 W or more, the laser irradiation by the laser welding device 50 is in a melting mode. In the melting mode, as shown in FIG. 12, the expansion portion W2 is formed on the +Z side surface of the workpiece W by laser melting. The expansion portion W2 is formed by volume expansion of the melted workpiece W.

The relationship between the width of the pattern and the laser output shown in FIG. 9 varies depending on the type of the workpiece. This is because the threshold value of the laser output for laser etching the workpiece may vary depending on the material characteristics (for example, laser absorptivity, thermal conductivity, expansion coefficient, and the like) of the workpiece. Therefore, a plurality of relationships between the laser output and the laser spot size shown in FIG. 9 may be prepared in advance according to the type of the workpiece.

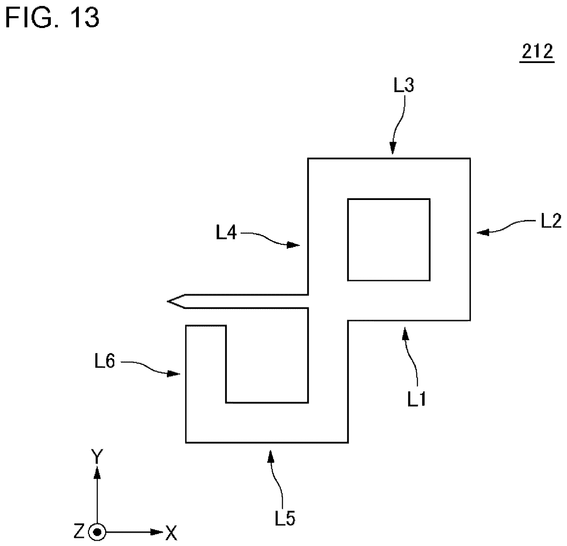

Next, a first example of the method of inspecting the laser welding with the laser welding device 50 will be described with reference to FIGS. 13 to 17. In FIGS. 13 to 17, laser welding is inspected by inspecting similarities or differences between the actual shape of the first pattern 212 and the pre-designed shape of the first pattern. In other words, the presence or absence of various abnormalities such as equipment abnormalities and signs of various abnormalities can be determined in real time each time welding is performed, and the stability of the quality of laser welding can be monitored. Even when the left second pattern 214, the right first pattern 222, and the right second pattern 224 are used, laser welding can be inspected in the same manner as when the first pattern 212 is used.

FIG. 13 is a diagram showing a first example of the abnormality in the shape of the first pattern 212.

In the example shown in FIG. 13, the width of the first line pattern L1 in the Y direction between the end portion of the first line pattern L1 on the -X side and the intersection portion between the first line pattern L1 and the fourth line pattern L4 is narrower than the pre-designed width. From the abnormality in this shape of the first pattern 212, for example, an abnormality of the laser welding device 50, such as a decrease in matching and tracking functions of the laser oscillator 502 and the galvanometric mirror optical system 510, a decrease in initial output of the laser oscillator 502, and an abnormality of the focus lens 508, or an abnormality on the workpiece W side, such as a misalignment of the workpiece W due to a set error of the workpiece W or a jig abnormality, and a deviation in assembly accuracy on the workpiece W side, is estimated.

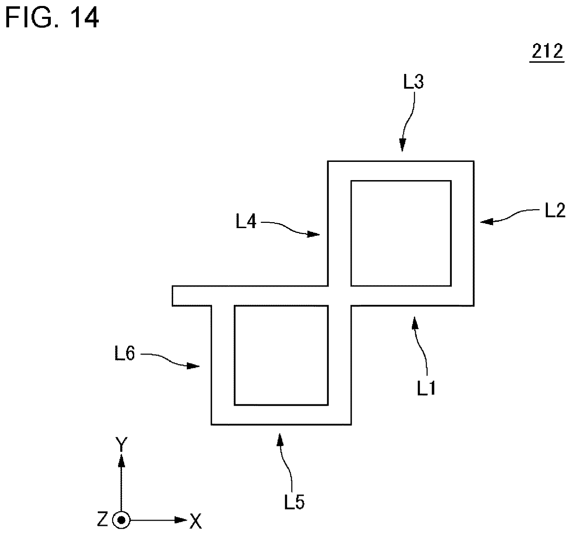

FIG. 14 is a diagram showing a second example of the abnormality in the shape of the first pattern 212.

In the example shown in FIG. 14, the width of all the line patterns of the first pattern 212 is narrower than the pre-designed width. From the abnormality in this shape of the first pattern 212, for example, an abnormality of the laser welding device 50, such as an abnormality of the focus lens 508, a decrease in the output of the laser oscillator 502, or an abnormality of the galvanometric mirror optical system 510, or an abnormality on the workpiece W side, such as a misalignment of the workpiece W due to a set error of the workpiece W or a jig abnormality, and a deviation in assembly accuracy on the workpiece W side, is estimated.

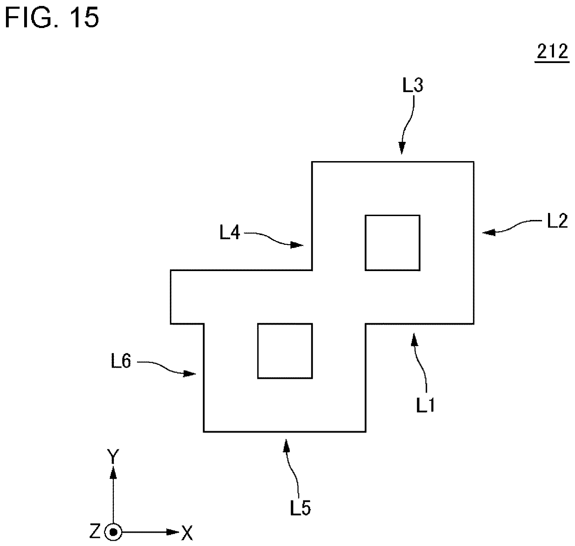

FIG. 15 is a diagram showing a third example of the abnormality in the shape of the first pattern 212.

In the example shown in FIG. 15, the width of all the line patterns of the first pattern 212 is wider than the pre-designed width. From the abnormality in this shape of the first pattern 212, an abnormality of the laser welding device 50, such as a decrease in the follow-up function of the galvanometric mirror optical system 510, a malfunction of the galvanometric mirror optical system 510, a synchronization failure between the laser oscillator 502 and the galvanometric mirror optical system 510, and an excess or a decrease in the output of the laser oscillator 502, particularly, an abnormality of the laser focus due to an abnormality in the operation of the focus lens 508, is estimated.

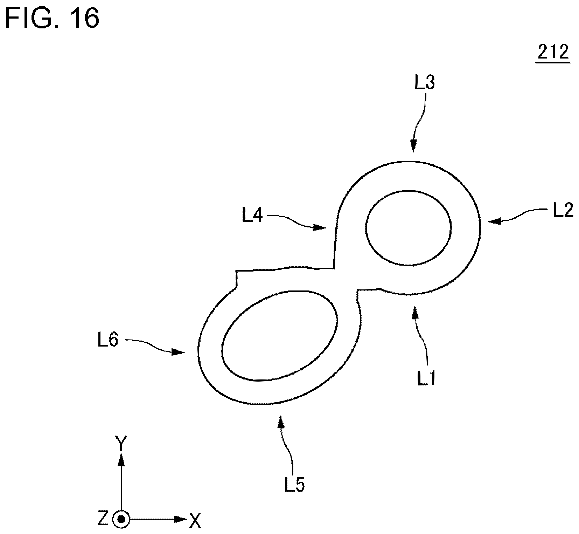

FIG. 16 is a diagram showing a fourth example of the abnormality in the shape of the first pattern 212.

In the example shown in FIG. 16, the shape from the end portion of the first line pattern L1 on the +X side to the end portion of the fourth line pattern L4 on the +Y side via the second line pattern L2 and the third line pattern L3 is deformed from the pre-designed shape. Specifically, the shape from the end portion of the first line pattern L1 on the +X side to the end portion of the fourth line pattern L4 on the +Y side via the second line pattern L2 and the third line pattern L3 is a substantially circular pattern. In addition, the shape from the end portion of the fourth line pattern L4 on the -Y side to the sixth line pattern L6 via the fifth line pattern L5 is deformed from a pre-designed shape designed. Specifically, the shape from the end portion of the fourth line pattern L4 on the -Y side to the sixth line pattern L6 via the fifth line pattern L5 is a substantially elliptical pattern. From the abnormality in this shape of the first pattern 212, an abnormality of the laser welding device 50, such as a decrease in the follow-up function of the galvanometric mirror optical system 510, a malfunction of the galvanometric mirror optical system 510, a synchronization failure between the laser oscillator 502 and the galvanometric mirror optical system 510, a decrease in the output of the laser oscillator 502, and an abnormality of the stage 550, is estimated.

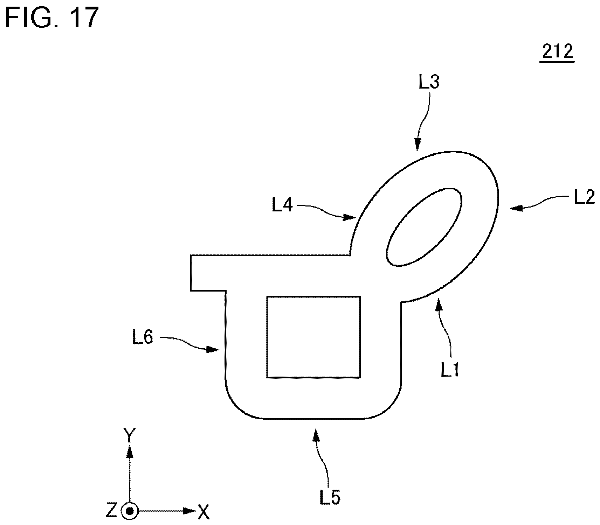

FIG. 17 is a diagram showing a fifth example of the abnormality in the shape of the first pattern 212.

In the example shown in FIG. 17, the shape from the end portion of the first line pattern L1 on the +X side to the end portion of the fourth line pattern L4 on the +Y side via the second line pattern L2 and the third line pattern L3 is deformed from the pre-designed shape. Specifically, the shape from the end portion of the first line pattern L1 on the +X side to the end portion of the fourth line pattern L4 on the +Y side via the second line pattern L2 and the third line pattern L3 is a substantially elliptical pattern. In addition, the corner portion between the end portion of the fourth line pattern L4 on the -Y side and the end portion of the fifth line pattern L5 on the +X side, and the corner portion between the end portion of the fifth line pattern L5 on the -X side and the end portion of the sixth line pattern L6 on the -Y side are deformed from the pre-designed shape. Specifically, these corner portions are rounded. From the abnormality in this shape of the left first pattern 212, an abnormality of the laser welding device 50, such as an abnormality of the reduction ratio of the galvanometric mirror optical system 510, a decrease in the follow-up function of the galvanometric mirror optical system 510, a synchronization failure between the laser oscillator 502 and the galvanometric mirror optical system 510, and an abnormality in various optical systems, is estimated.

In the inspection described with reference to FIGS. 13 to 17, various abnormalities such as an abnormality of the laser welding device 50 can be detected from the abnormality in the shape of the first pattern 212, and signs of the various abnormalities can be grasped. The abnormality in the shape of the first pattern 212 can be detected by a relatively simple method such as microscopic observation or automatic image inspection. When the abnormality in the shape of the first pattern 212 is observed by such a method, the quality of laser welding can be also inspected in-line without stopping the production line. Therefore, the factors affecting the quality of laser welding can be relatively easily inspected.

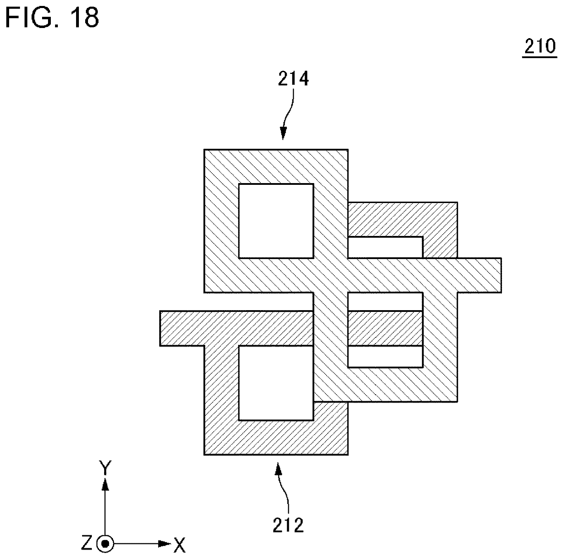

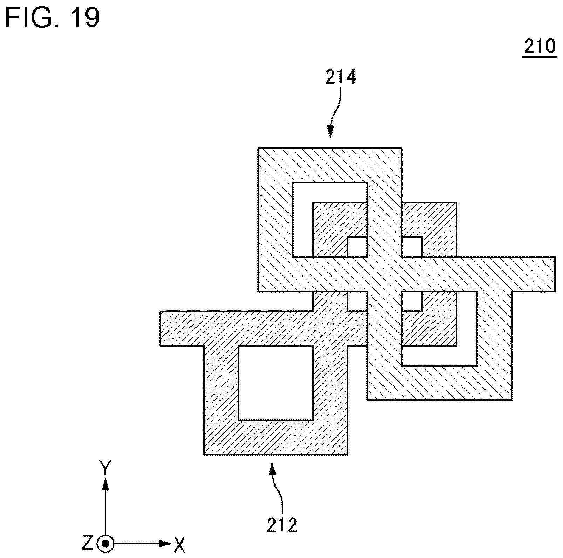

Next, a second example of the method of inspecting the laser welding with the laser welding device 50 will be described with reference to FIGS. 18 and 19. In FIGS. 18 and 19, laser welding is inspected by inspecting similarities or differences between the actual shape of the mark 210 and the pre-designed mark shape.

FIG. 18 is a diagram showing a first example of the abnormality in the shape of the mark 210.

In the example shown in FIG. 18, at least one of the first pattern 212 or the second pattern 214 is shifted from the pre-designed position in the Y direction. From the abnormality in this shape of the mark 210, an abnormality of the laser welding device 50, such as an abnormality of the stage 550 in the Y direction, an abnormality of the mechanical system of the galvanometric mirror optical system 510, or an abnormality of the irradiation position of the laser beam B, or an abnormality of the workpiece W side, such as an abnormality of the fixing jig of the workpiece W or an incorporation abnormality of the structure including the workpiece W, is estimated.

FIG. 19 is a diagram showing a second example of the abnormality of the mark 210.

In the example shown in FIG. 19, at least one of the first pattern 212 or the second pattern 214 is shifted from the pre-designed position in the X direction and the Y direction. From the abnormality in this shape of the mark 210, an abnormality of the laser welding device 50, such as an abnormality of the stage 550 in the X direction and the Y direction, an abnormality of the mechanical system of the galvanometric mirror optical system 510, or an abnormality of the irradiation position of the laser beam B, or an abnormality of the workpiece W side, such as an abnormality of the fixing jig of the workpiece W or an incorporation abnormality of the structure including the workpiece W, is estimated.

Even in the inspection described with reference to FIGS. 18 and 19, various abnormalities such as an abnormality of the laser welding device 50 can be detected from the abnormality in the shape of the mark 210 in the same manner as the inspection described with reference to FIGS. 13 to 17, and signs of the various abnormalities can be grasped. Therefore, the factors affecting the quality of laser welding can be relatively easily inspected.

Next, a third example of the method of inspecting the laser welding with the laser welding device 50 will be described with reference to FIG. 7.

In this example, the laser welding is inspected by inspecting similarities or differences between the actual positions of the left mark 210 and the right mark 220 and the pre-designed positions of the left mark and the right mark. Specifically, deformation of the workpiece such as elongation or displacement of the positive electrode tab 120 may occur due to heat generated during the formation of the laser welding portion 200. Due to the deformation of the workpiece, at least one of a distance in the X direction between the position of the left mark 210 in the X direction and the position of the right mark 220 in the X direction or a distance in the Y direction between the position of the left mark 210 in the Y direction and the position of the right mark 220 in the Y direction may vary. For example, the deformation of the positive electrode tab 120 due to the influence of heat generated during the formation of the laser welding portion 200 can be grasped due to the deviation of the position of the right first pattern 222 with respect to the left first pattern 212 from the design position. Furthermore, even if the deformation of the positive electrode tab 120 is recovered or the position of the left first pattern 212 is shifted by irradiating the laser for forming the right first pattern 222 and the left second pattern 214 after the influence of the heat generated during the formation of the laser welding portion 200 is eliminated, various deformations of the positive electrode tab 120, such as the return of the deformation of the positive electrode tab 120 and the shift of the position of the left first pattern 212, can be grasped. Therefore, the deformation of the workpiece due to the laser welding can be estimated from the positions of the left mark 210 and the right mark 220. Therefore, the factors affecting the quality of laser welding can be relatively easily inspected.

In addition, the laser welding may be inspected by inspecting similarities or differences between the actual shape of the mark 210 and the pre-designed shape of a mark. For example, when an abnormality occurs in the laser output and the laser output is increased, the mark 210 is crushed and the mark 210 cannot be read. Therefore, the abnormality of the laser output can be estimated from the abnormality of the mark 210. Therefore, the factors affecting the quality of laser welding can be relatively easily inspected.

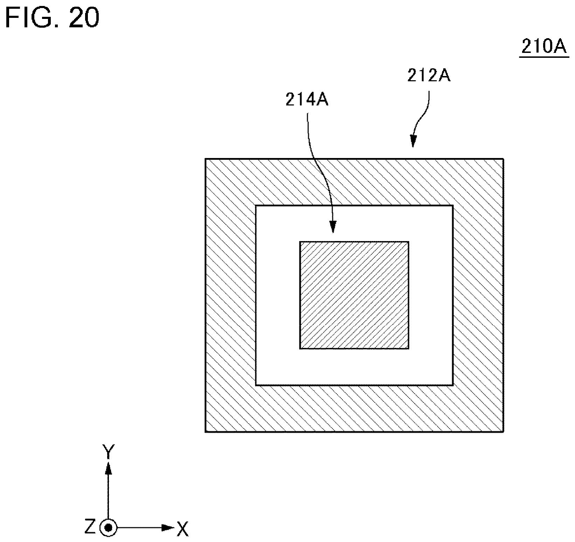

FIG. 20 is a view showing a laser etching mark 210A according to a modification example.

The laser etching mark 210A has an outer laser etching pattern 212A (hereinafter, simply referred to as an outer pattern 212A) and an inner laser etching pattern 214A (hereinafter, simply referred to as an inner pattern 214A). The outer pattern 212A is a substantially square frame pattern. The inner pattern 214A is a substantially square pattern. The inner pattern 214A is surrounded by the outer pattern 212A. In one example, the inner pattern 214A is formed after the outer pattern 212A is formed. In this example, the inner pattern 214A can be formed when a region surrounded by the outer pattern 212A is present. Therefore, the inspection by visual observation, a camera, or the like for forming the inner pattern 214A at the center of the outer pattern 212A in the XY plane direction can be easily performed, as compared with a case where the outer pattern 212A is formed after the inner pattern 214A is formed. However, the outer pattern 212A may be formed after the inner pattern 214A is formed. Alternatively, the inner pattern 214A and the outer pattern 212A may be formed at the same time.

In the design of the laser etching mark 210A, the center of the outer pattern 212A in the XY plane direction and the center of the inner pattern 214A in the XY plane direction overlap each other in the Z direction. Therefore, when an abnormality occurs in the laser welding device 50, the center of the outer pattern 212A in the XY plane direction and the center of the inner pattern 214A in the XY plane direction may be shifted from each other. Therefore, the abnormality of the laser welding device 50 can be estimated from the abnormality of the laser etching mark 210A. Therefore, the factors affecting the quality of laser welding can be relatively easily inspected.

The shape of the laser etching mark is not limited to the shape described in the above-described embodiment and modification examples.

For example, the laser etching mark may have a corner portion. In this example, the abnormality of the laser welding device 50 can be estimated from the rounding of the corner portion.

Alternatively, the laser etching mark may have a plurality of laser etching patterns at least partially overlapping each other. In this example, the abnormality of the laser welding device 50 can be estimated from the deviation of the positions of the plurality of laser etching patterns.

Alternatively, the laser etching mark may have a plurality of laser etching patterns having centers overlapping each other. In this example, the abnormality of the laser welding device 50 can be estimated from the deviation of the centers of the plurality of laser etching patterns.

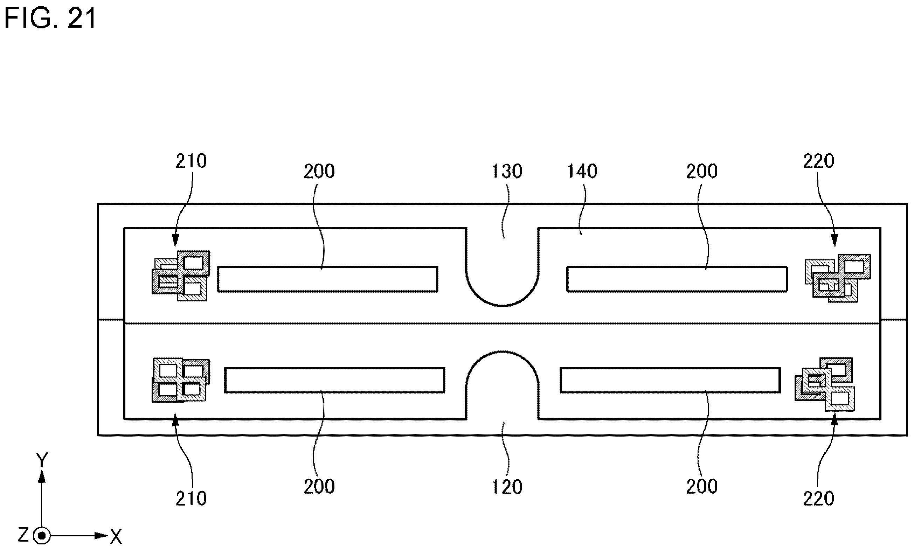

FIG. 21 is a view for describing another example of the method of inspecting the laser welding according to the embodiment.

In the example shown in FIG. 21, each of the positive electrode tab 120 and the negative electrode tab 130 is bonded to the bus bar 140 by the laser welding portion 200. In the example shown in FIG. 21, the laser welding portion 200 that bonds the positive electrode tab 120 and the bus bar 140 to each other is divided into two in the X direction. A left mark 210 and a right mark 220 are formed on both sides of the two separated laser welding portions 200 in the X direction. Similarly, the laser welding portion 200 that bonds the negative electrode tab 130 and the bus bar 140 to each other is divided into two in the X direction. A left mark 210 and a right mark 220 are formed on both sides of the two separated laser welding portions 200 in the X direction.

Even in the example shown in FIG. 21, similarly to the above-described example, the factors affecting the quality of laser welding can be easily inspected by using the left mark 210 and the right mark 220. In addition, from the test results of the left mark 210 and the right mark 220 provided on the positive electrode tab 120 or the negative electrode tab 130, the assembly position accuracy of various components in the manufacturing process of the battery module 10 or the product including the battery module 10 can be visualized, and it can also be used for quality assurance of the battery module 10 or the product including the battery module 10.

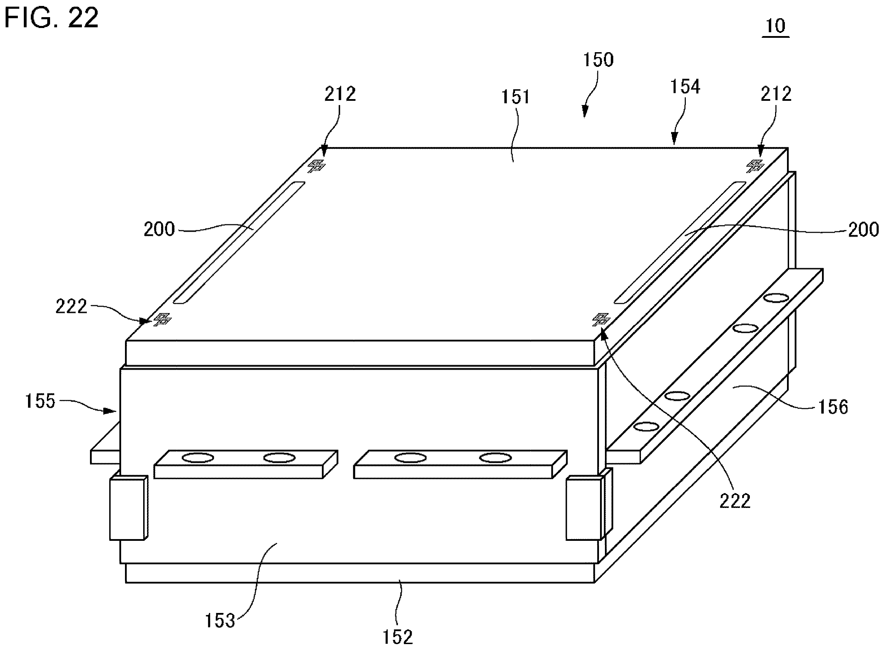

FIG. 22 is a view for describing still another example of the method of inspecting the laser welding according to the embodiment.

The housing 150 shown in FIG. 22 houses, for example, the plurality of battery cells 100 shown in FIG. 1. The housing 150 includes a top plate 151, a bottom plate 152, a front plate 153, a rear plate 154, a first side plate 155, and a second side plate 156. A portion of the top plate 151 overlapping the first side plate 155 and an upper end portion of the first side plate 155 are bonded to each other by the laser welding portion 200. A left first pattern 212 and a right first pattern 222 are formed on both sides of the laser welding portion 200. A portion of the top plate 151 overlapping the second side plate 156 and an upper end portion of the second side plate 156 are bonded to each other by the laser welding portion 200. A left first pattern 212 and a right first pattern 222 are formed on both sides of the laser welding portion 200.

Even in the example shown in FIG. 22, similarly to the above-described example, using the left first pattern 212 and the right first pattern 222, the factors affecting the quality of laser welding can be easily inspected.

Although the embodiments and modification examples of the present invention have been described above with reference to the accompanying drawings, these are merely examples of the present invention, and various other configurations may be employed.

This application claims priority based on Japanese Patent Application No. 2023-056202 filed on March 30, 2023, and the disclosure of which is incorporated herein in its entirety by reference.

### REFERENCE SIGNS LIST

10 battery module, 50 laser welding device, 100 battery cell, 110 exterior material, 120 positive electrode tab, 130 negative electrode tab, 140 bus bar, 150 housing, 151 top plate, 152 bottom plate, 153 front plate, 154 rear plate, 155 first side plate, 156 second side plate, 200 laser welding portion, 210 left laser etching mark, left mark, mark, 210A laser etching mark, 212 left first laser etching pattern, left first pattern, first pattern, 212A outer laser etching pattern, outer pattern, 214 left second laser etching pattern, left second pattern, second pattern, 214A inner laser etching pattern, inner pattern, 220 right laser etching mark, right mark, 222 right first laser etching pattern, right first pattern, 224 right second laser etching pattern, right second pattern, 502 laser oscillator, 504 optical fiber, 506 beam expander, 508 focus lens, 510 galvanometric mirror optical system, 512 condenser lens, 514 movable mirror, 516 cover glass, 520 moving unit, 550 stage, A1 first arrow, A2 second arrow, A3 third arrow, A4 fourth arrow, A5 fifth arrow, A6 sixth arrow, B laser beam, L1 first line pattern, L2 second line pattern, L3 third line pattern, L4 fourth line pattern, L5 fifth line pattern, L6 sixth line pattern, W workpiece

## Claims

1. A battery module comprising:
a laser welding portion formed on a workpiece; and
a laser etching mark formed on at least one of both sides of the laser welding portion on the workpiece.

2. The battery module according to Claim 1, wherein
the laser etching mark has a corner portion.

3. The battery module according to Claim 1, wherein
the laser etching mark has a plurality of patterns at least partially overlapping with each other.

4. The battery module according to Claim 1, wherein
the laser etching mark has a plurality of patterns whose centers overlap with each other.

5. The battery module according to any one of Claims 1 to 4, wherein similarities or differences between the laser etching mark and a pre-designed laser etching mark are inspected.

6. A method of manufacturing a battery module comprising:
a step of forming a laser welding portion on a workpiece; and
a step of forming a laser etching mark on at least one of both sides of the laser welding portion on the workpiece.

7. A method of inspecting laser welding comprising:
a step of inspecting similarities or differences between a laser etching mark formed on a workpiece on which a laser welding portion is formed and a pre-designed laser etching mark.
